# EUROPÄISCHE PATENTSCHRIFT

(11) **EP 1 250 557 B1**
(45) Veröffentlichungstag und Bekanntmachung des Hinweises auf die Patenterteilung: **13.10.2004**
(21) Anmeldenummer: 01902353.0
(22) Anmeldetag: 25.01.2001
(51) Int. Cl.: F25D 29/00, F25D 11/02, F25D 17/06

(54) **KÜHLGERÄT MIT EINEM KÜHL-, EINEM KALTLAGER- UND EINEM GEFRIERFACH**
REFRIGERATING APPLIANCE COMPRISING A REFRIGERATING COMPARTMENT, A COLD STORAGE COMPARTMENT AND A FREEZER COMPARTMENT
REFRIGERATEUR COMPORTANT UN COMPARTIMENT REFRIGERE, UN COMPARTIMENT D'ENTREPOSAGE FRIGORIFIQUE ET UN COMPARTIMENT DE CONGELATION

(30) Priorität: 25.01.2000 DE 20001253 U
(43) Veröffentlichungstag der Anmeldung: 23.10.2002
(73) Patentinhaber: LIEBHERR-HAUSGERÄTE GMBH, 88416 Ochsenhausen (DE)
(72) Erfinder: SCHMID, Eugen, 88400 Biberach-Mettenberg (DE)
(74) Vertreter: Gossel, Hans K., Dipl.-Ing.
(86) Internationale Anmeldenummer: PCT/EP2001/000825
(87) Internationale Veröffentlichungsnummer: WO 2001/055655

(56) Entgegenhaltungen:
- EP-A- 0 326 049
- DE-U- 8 914 761
- GB-A- 1 094 059
- GB-A- 1 485 666
- US-A- 5 255 530

## Beschreibung

Die Erfindung betrifft ein Kühlgerät mit einem Kühl-, einem Kaltlager- und einem Gefrierfach, die durch Zwischenwände und mindestens eine Tür oder Klappe voneinander getrennt sind.

Aus EP 0 793 066 A2 ist ein Kühlgerät mit einem Kühlfach und einem Kaltlagerfach bekannt, die durch eine horizontale Zwischenwand voneinander getrennt und mit mindestens einer diese verschließenden Tür oder Klappe versehen sind. Bei diesem bekannten Kühlschrank ist im oberen Bereich des Kühlfachs ein Kühlgebläse angeordnet und durch eine zu der Rückwand des Kühlfachs in etwa parallele Zwischenwand ist ein Kühlluftkanal abgeteilt, in dem sich ein Verdampfer befindet und der im hinteren Bereich der Zwischenwand in das Kaltlagerfach mündet. Im vorderen Bereich der Zwischenwand sind Durchbrüche oder ist ein Spalt zwischen der Zwischenwand und der Tür vorgesehen, durch die die Kühlluft in das Kühlfach eintritt. Die Kälteverteilung in dem Kühlfach und dem Kaltlagerfach wird durch die Laufzeit des Kompressors und/oder die Einschaltdauer und/oder die Drehzahl des Kühlgebläses gesteuert.

Moderne Kühlgeräte sind üblicherweise zusätzlich auch mit einem Gefrierfach, das üblicherweise als 4-Sterne-Fach bezeichnet wird, versehen.

Bekannte Geräte, die neben einem Kühlfach und einem Kaltlagerfach zusätzlich mit einem Gefrierfach versehen sind, sind mit zwei oder drei Verdampfern und Magnetventilen versehen, um den unterschiedlichen Kältebedarf bei den wechselnden Umgebungs- und Gebrauchsbedingungen zu steuern. Um eine gleichmäßige Temperatur im Kaltlagerfach zu gewährleisten, ist dieses mit einem Ventilator versehen.

Aufgabe der Erfindung ist es, ein Kühlgerät der eingangs angegebenen Art zu schaffen, das unter Wegfall der Magnetventile einen einfacheren Aufbau aufweist.

Erfindungsgemäß wird diese Aufgabe durch ein Kühlgerät mit den Merkmalen des Anspruchs 1 gelöst.

Bei dem erfindungsgemäßen Kühlgerät besteht der gemeinsame Verdampfer für die Kühl-, Kaltlager- und Gefrierfächer aus einer Platine, die so zugeschnitten und gebogen ist, daß der Verdampferabschnitt für das Gefrierfach räumlich getrennt von dem Verdampferabschnitt des Kühlfachs angeordnet werden kann.

Ein Kühlgerät mit einen Kühlfach und einem Gefrierfach, dessen Verdampfer aus zwei in Reihe geschalteten Verdampferabschnitten, von denen ein Abschnitt dem Gefrierfach und ein Abschnitt dem Kühlfach zugeordnet ist, ist beispielsweise aus EP 0 758 732 A2 bekannt.

Der in dem Kühlluftkanal angeordnete Verdampferabschnitt bewirkt die Kühlung des Kühl- und des Kaltlagerfachs. Dabei erfolgt die Kühlung und die Steuerung der Kälteleistung grundsätzlich in der in EP 0 793 066 A2 beschriebenen Weise.

Um zusätzlich die Einhaltung der Temperatur in dem Gefrierfach, bei dem es sich um eine 4-Sterne-Fach handeln kann, zu gewährleisten, wird nach einer bevorzugten Ausführungsform der Ventilator in Abhängigkeit von der Umgebungstemperatur mit variabler Drehzahl angesteuert. Bei niedriger Umgebungstemperatur sinkt der Kältebedarf des Kühlteils, so daß die Drehzahl und/oder die Laufzeit des Kühlgebläses reduziert wird. Dadurch sinkt auch die Verdampfungstemperatur. Diese tiefere Verdampfungstemperatur bewirkt eine höhere Kälteleistung des im Gefrierfach zugeordneten Verdampferabschnitts. Dies wiederum hat zur Folge, daß die Temperaturen im Gefrierfach, die niedriger sind als -18°C, auch bei niederen Umgebungstemperaturen trotz reduzierter Kompressorlaufzeiten und/oder Kompressordrehzahlen eingehalten werden.

Sollte sich ergeben, daß dennoch aufgrund niedriger Umgebungstemperaturen die Temperatur im Gefrierfach unzulässig ansteigt, kann im Kühlfach oder auch im Kaltlagerfach eine thermische Last, also eine Heizung, angeordnet werden, um dadurch die Kompressorlaufzeiten zu erhöhen.

Zur Überwachung der Temperaturen können Temperaturfühler für einen oder beide Verdampferabschnitte, für das Kühlfach und für das Kaltlagerfach vorgesehen werden. Die Meßergebnisse der Temperaturfühler können einer Steuerelektronik, die vorzugsweise einen Mikroprozessor einschließt, zugeführt werden, die sodann die Laufzeiten und/oder Drehzahl des Ventilators und die Laufzeit und/oder die Drehzahl des Kompressors steuert.

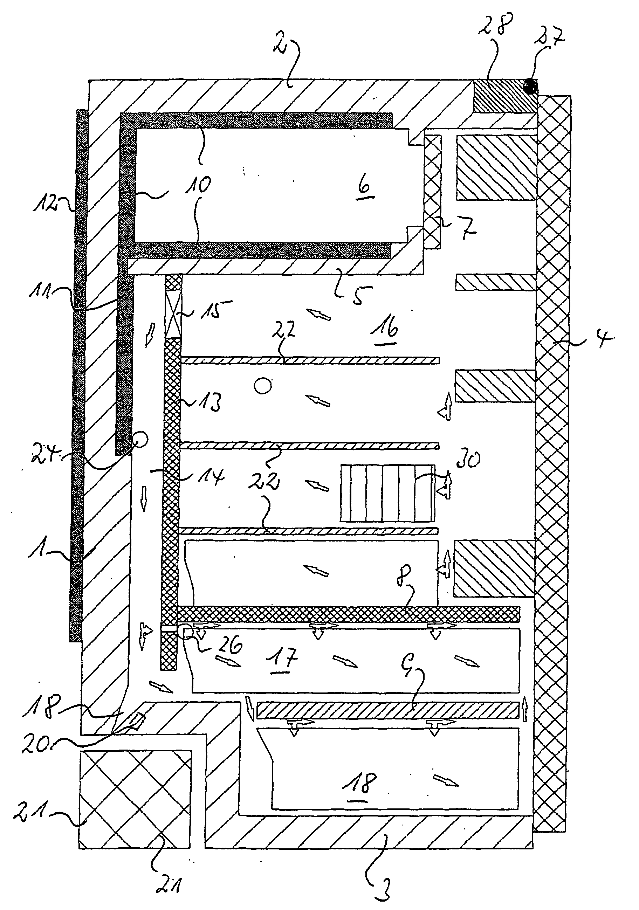

Ein Ausführungsbeispiel der Erfindung wird nachstehend anhand der Zeichnung näher erläutert, in deren einstiger Figur ein Vertikalschnitt durch ein Kühlgerät mit einem Kühl-, einem Kaltlager- und einem Gefrierfach dargestellt ist.

Das Kühlgerät besteht aus einem schrankförmigen Korpusteil 1 mit einer Rückwand, einer Deckwand 2 und einem Boden 3, die mit üblichen Isolierungen versehen sind. Das Schrankteil 1 ist in üblicher Weise durch eine Tür 4 verschließbar. Von dem Innenraum des Korpusteil 1 ist durch eine Zwischenwand 5 in üblicher Weise ein Gefrierfach 6 abgeteilt, dessen Öffnung durch eine Tür 7 verschließbar ist. Im Bodenbereich des Innenraums ist ein Kaltlagerfach durch eine horizontale Trennplatte 8 abgeteilt. Das Kaltlagerfach ist in der dargestellten Weise durch eine weitere Zwischenwand 9 in ein trockenes und ein feucht-trockenes Kaltlagerfach mit Temperaturen im Bereich von 0° C bis 3° C unterteilt.

Für das Kühlgerät ist nur ein einziger Verdampfer vorgesehen, der aus einer üblichen Platine gebogen und geformt ist. Ein U-förmig gebogener Abschnitt 10 des Verdampfers ist dem Gefrierfach 6 zugeordnet. Ein Kühlteilverdampferabschnitt 11 ist in die Rückwand des Korpusteils in üblicher Weise eingeschäumt. Auch der U-förmige Verdampferabschnitt 10 kann in der dargestellten Weise in die Isolierung eingeschäumt sein.

Der Verflüssiger 12 ist in üblicher Weise auf der Rückwand des Korpusteils angeordnet.

Unterhalb der das Gefrierfach abteilenden Trennwand 5 ist eine zu der Rückwand parallele vertikale Trennplatte 13 angeordnet, die mit der Rückwand einen Kühlluftkanal 14 begrenzt. In ihrem oberen Bereich ist die vertikal Trennplatte 13 mit einem Durchbruch versehen, in dem ein Kühlluftgebläse 15 angeordnet ist, das Kühlluft aus dem Kühlfach 16 ansaugt und in den Kühlluftkanal 14 einbläst. Der Kühlluftkanal 14 mündet unterhalb der horizontalen Trennplatte 8 in das Kaltlagerfach mit den Kaltlagerfachteilen 17, 18.

Am unteren Ende des Kühlluftkanals 14 ist eine Tauwasserrinne 19 angeordnet, die durch eine elektrische Tauwasserrinnenheizung 20 oder ein Wärmeleitblech beheizt werden kann. Sich in der Tauwasserrinne 19 ansammelndes Tauwasser wird zu einer auf dem Kompressor 21 angeordnete Schale geleitet, in der dieses verdunsten kann.

Das Kühlfach 16 ist in üblicher Weise mit einschiebbaren Ablagen 22 für das Kühlgut versehen.

Im Bereich des Verdampferabschnitts 11, der in dem Kühlluftkanal 14 angeordnet ist, ist ein Temperaturfühler 24 angeordnet, der die Verdampfertemperatur des Verdampferabschnitts 11 mißt.

Im Kühlfach 16 ist ein Temperaturfühler 25 angeordnet.

Im Kaltlagerfach 17, 18 ist ein Temperaturfühler 26 vorgesehen.

Weiterhin ist ein Temperaturfühler 27 zum Messen der Umgebungstemperatur am Korpusteil angeordnet.

Die Meßwerte der Temperaturfühler 24 bis 27 werden einer Steuerelektronik 28 zugeführt, die vorzugsweise mit einem Mikrocomputer versehen ist und die nach einem vorgegebenen Programm aufgrund der gemessenen Temperaturen die Drehzahl und/oder Einschaltdauer des Kühlluftgebläses 15 und die Laufzeit und/oder Drehzahl des Kompressors 21 entsprechend der benötigten Kälteleistung in den einzelnen Fächern steuert.

Der durch das Kühlgebläse 15 erzeugte Kühlluftstrom, der zunächst aus dem Kühlluftkanal 14 durch Durchbrüche und Spalten in das Kaltlagerfach 17, 18 eintritt und aus diesem durch zwischen den Trennplatten und der Tür gebildeten Spalten in das Kühlfach gelangt und dessen Fächer umspült, ist durch die eingezeichneten Pfeile und Doppelpfeile kenntlich gemacht worden.

## Patentansprüche

1. Kühlgerät mit einem Kühl-, einem Kaltlager- und einem Gefrierfach (16, 17, 18, 6), die durch Zwischenwände (5, 8) und durch mindestens eine Tür (4) oder Klappe voneinander getrennt sind, mit
einem im Kühlfach (16) zugeordneten Kühlluftkanal (14), in dessen Einlaufbereich ein aus dem Kühlfach (16) Kühlluft absaugendes Kühlgebläse (15) angeordnet ist und dessen Auslauf in das Kaltlagerfach (17, 18) mündet,
einem einzigen Verdampfer, von dem ein Abschnitt (10) dem Gefrierfach (6) und ein Abschnitt (11) dem Kühlluftkanal (14) zugeordnet ist,
Durchbrüchen und/oder Spalten in und/oder zwischen der Zwischenwand (8) und/oder Tür (4), die das Kühlfach (16) von dem Kaltlagerfach (17, 18) trennen,
einem Umgebungstemperaturfühler (27), und
einer Steuer- oder Regeleinrichtung (28), die die Einschaltdauer und/oder die Drehzahl des Kühlgebläses (15) in Abhängigkeit der von dem Umgebungstemperaturfühler (27) gemessenen Umgebungstemperatur steuert.

2. Kühlgerät nach Anspruch 1, **dadurch gekennzeichnet, daß** die Steuer- oder Regeleinrichtung (28) zusätzlich die Laufzeit und/oder die Drehzahl des Kompressors (21) steuert.

3. Kühlgerät nach einem der Ansprüche 1 oder 2, **dadurch gekennzeichnet, daß** der Kühlluftkanal (14) zwischen der Rückwand des Kühlfachs (16) und einer zu dieser parallelen Zwischenwand (13) gebildet ist.

4. Kühlgerät nach einem der Ansprüche 1 bis 3, **dadurch gekennzeichnet, daß** das Kaltlagerfach durch eine mit Durchbrüchen und/oder Spalten versehene Zwischenwand (9) unterteilt ist.

5. Kühlgerät nach einem der Ansprüche 1 bis 4, **dadurch gekennzeichnet, daß** ein Kühlfachluftfühler (25) vorgesehen ist.

6. Kühlgerät nach einem der Ansprüche 1 bis 5, **dadurch gekennzeichnet, daß** ein Temperaturfühler (24) für den in dem Kühlkanal angeordneten Verdampferabschnitt (11) vorgesehen ist.

7. Kühlgerät nach einem der Ansprüche 1 bis 6, **dadurch gekennzeichnet, daß** ein Temperaturfühler (26) für das Kaltlagerfach (17, 18) vorgesehen ist.

8. Kühlgerät nach einem der Ansprüche 1 bis 7, **dadurch gekennzeichnet, daß** in dem Kühlfach eine eine thermische Last bildende Einrichtung (30) angeordnet ist.

9. Kühlgerät nach einem der Ansprüche 1 bis 8, **gekennzeichnet durch** eine **durch** eine elektrische Tauwasserrinnenheizung oder ein Wärmeleitblech beheizbare Tauwasserrinne.

## Claims

1. Refrigerator having a refrigerating compartment, a cold-storage compartment and a freezer compartment (16, 17, 18, 6) which are separated from one another by intermediate walls (5, 8) and by at least one door (4) or shutter, having
an associated cooling-air channel (14) in the refrigerating compartment (16), a cooling fan (15) which extracts cooling air from the refrigerating compartment (16) being arranged in the inlet region of said cooling-air channel, and the outlet of the latter opening out into the cold-storage compartment (17, 18),
a single evaporator, of which a portion (10) is assigned to the freezer compartment (6) and a portion (11) is assigned to the cooling-air channel (14),
through-passages and/or gaps in and/or between the intermediate wall (8) and/or door (4), which separate the refrigerating compartment (16) from the cold-storage compartment (17, 18),
an ambient-temperature sensor (27), and
a control or regulating device (28) which controls the operating duration and/or the rotational speed of the cooling fan (15) in dependence on the ambient temperature measured by the ambient-temperature sensor (27).

2. Refrigerator according to Claim 1, **characterized in that** the control or regulating device (28) additionally controls the running time and/or the rotational speed of the compressor (21).

3. Refrigerator according to either of claims 1 and 2, **characterized in that** the cooling-air channel (14) is formed between the rear wall of the refrigerating compartment (16) and an intermediate wall (13) parallel to the same.

4. Refrigerator according to one of Claims 1 to 3, **characterized in that** the cold-storage compartment is subdivided by an intermediate wall (9) provided with through-passages and/or gaps.

5. Refrigerator according to one of Claims 1 to 4, **characterized in that** a refrigerating-compartment air sensor (25) is provided.

6. Refrigerator according to one of Claims 1 to 5, **characterized in that** a temperature sensor (24) is provided for the evaporator portion (11) arranged in the cooling channel.

7. Refrigerator according to one of Claims 1 to 6, **characterized in that** a temperature sensor (26) is provided for the cold-storage compartment (17, 18).

8. Refrigerator according to one of Claims 1 to 7, **characterized in that** a thermal-load-forming device (30) is arranged in the refrigerating compartment.

9. Refrigerator according to one of Claims 1 to 8, **characterized by** a drip trough which can be heated by an electric drip-trough heater or a heat-conducting plate.

## Revendications

1. Réfrigérateur comportant un compartiment de réfrigération, un compartiment de conservation au froid et un compartiment de congélation (16, 17, 18, 6), qui sont séparés les uns des autres par des cloisons (5, 8) et au moins une porte (4) ou abattant, comportant
un canal d'air froid (14) agencé dans le compartiment de réfrigération (16) et dans la zone d'admission duquel est agencée une soufflerie d'air froid (15) aspirant l'air froid hors du compartiment de réfrigération (16) et dont la zone d'évacuation débouche dans le compartiment de conservation au froid (17, 18),
un seul évaporateur, dont une partie (10) est affectée au compartiment de congélation (6) et une partie (11) est affectée au canal d'air froid (14),
des trous débouchants et/ou des fentes dans ou entre la cloison (8) et/ou la porte (4), qui séparent le compartiment de réfrigération (16) du compartiment de conservation au froid (17, 18),
un capteur de température ambiante (27), et
un dispositif de commande et de réglage (28), qui commande le temps de fonctionnement et/ou la vitesse de rotation de la soufflerie d'air froid (15) en fonction de la température ambiante mesurée par le capteur de température ambiante (27).

2. Réfrigérateur selon la revendication 1, **caractérisé en ce que** l'unité de commande et de réglage (28) commande en plus le temps de fonctionnement et/ou la vitesse de rotation du compresseur (21).

3. Réfrigérateur selon la revendication 1 ou 2, **caractérisé en ce que** le canal d'air froid (14) est formé entre la paroi arrière du compartiment de réfrigération (16) et une cloison (13) parallèle à celle-ci.

4. Réfrigérateur selon l'une quelconque des revendications 1 à 3, **caractérisé en ce que** le compartiment de conservation au froid est subdivisé par une cloison (9) munie de trous débouchants et/ou de fentes.

5. Réfrigérateur selon l'une quelconque des revendications 1 à 4, **caractérisé en ce qu'**il est prévu un capteur d'air (25) du compartiment de réfrigération.

6. Réfrigérateur selon l'une quelconque des revendications 1 à 5, **caractérisé en ce qu'**il est prévu un capteur de température (24) pour la partie d'évaporateur (11) agencée dans le canal d'air froid.

7. Réfrigérateur selon l'une quelconque des revendications 1 à 6, **caractérisé en ce qu'**il est prévu un capteur de température (26) pour le compartiment de conservation au froid (17, 18).

8. Réfrigérateur selon l'une quelconque des revendications 1 à 7, **caractérisé en ce qu'**un dispositif (30) formant une charge thermique est agencé dans le compartiment de réfrigération.

9. Réfrigérateur selon l'une quelconque des revendications 1 à 8, **caractérisé par** un chauffage électrique ou une tôle conductrice de chaleur destinés à chauffer la goulotte pour l'eau de condensation.
